# EUROPÄISCHE PATENTSCHRIFT

(11) **EP 1 455 481 B1**
(45) Veröffentlichungstag und Bekanntmachung des Hinweises auf die Patenterteilung: **28.11.2012**
(21) Anmeldenummer: 04004466.1
(22) Anmeldetag: 27.02.2004
(51) Int. Cl.: H04L 29/06, H04L 12/28

(54) **Verfahren zur Internetnutzung unter Verwendung fremder Anschlüsse**
Method of Internet-use using foreign connections
Procédé d'usage Internet utilisant une connexion étrange

(30) Priorität: 07.03.2003 DE 10310386
(43) Veröffentlichungstag der Anmeldung: 08.09.2004
(73) Patentinhaber: Deutsche Telekom AG, 53113 Bonn (DE)
(72) Erfinder: Milczewsky, Klaus, Dipl.-Ing., 64342 Seeheim-Jugenheim (DE)
(74) Vertreter: Drosch, Ulrich

(56) Entgegenhaltungen:
- WO-A-03/017125
- US-A- 6 151 628
- US-A1- 2002 036 991
- US-A1- 2002 041 663
- US-B1- 6 240 091

## Beschreibung

Die Erfindung betrifft ein Verfahren, das das Einbuchen (Login) für registrierte Kunden eines Internet Service Providers (ISP) über fremde Anschlüsse gestattet und zusätzlich dem Anschlussinhaber Provisionseinnahmen ermöglicht.

Bei der Einwahl ins Internet wird in der Regel nach dem physikalischen Aufbau eine Verbindung zum Internet über das sogenannte PPP-Protokoll (siehe RFC 1661, Juli 1994) und das Radius Protokoll (RFC 2865, Juni 2000) bereitgestellt. Die RFCs (Request for comments) sind im englischen Originaltext unter www.ietf.org zu finden.

Das Point-to-Point Protokoll (PPP-Protokoll) wird netzseitig durch einen Remote Access Server (RAS) terminiert, der die PPP-Verhandlung kontrolliert, den Kunden authentisiert (in der Regel mit Hilfe des RADIUS Protokolls) und die Nutzung protokolliert. Radius steht für Remote Authentication Dial In User Service (RADIUS). Der Benutzer übergibt zur Authentisierung seine Benützerkennüng und sein Passwort im Rahmen der PPP-Authentifizierung. Dies kann mittels der Verfahren PAP oder CHAP geschehen (PAP und CHAP sind Verfahren zur Passwortübermittlung gemäß dem RFC 1661). Hierdurch wird der Nutzer erkannt und als Initiator der Verbindung festgehalten. Die'Nutzung wird in einem Radius Datensatz erfasst und an den Radius Server des ISP, bei dem der Nutzer registriert ist, weitergeleitet.

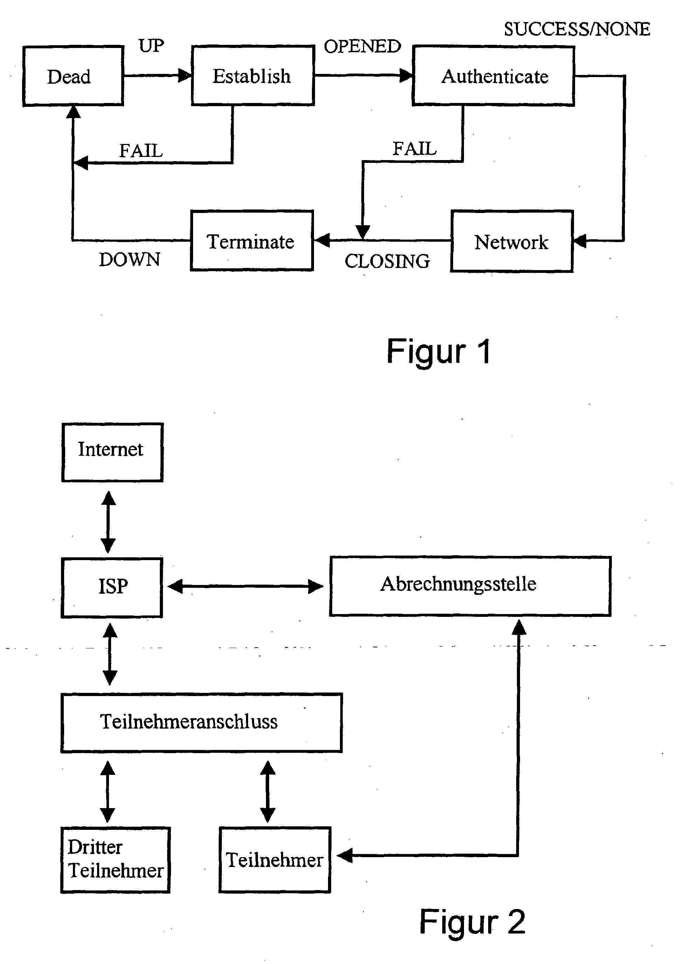

- **Figur 1**: zeigt das PPP-Schema aus RFC 1661

Wenn der PPP-Endpunkt die Authentisierung erfolgreich vorgenommen hat, wird eine IP-Verbindung hergestellt und der Benutzer kann im Internet surfen.

Die Radiusdatensätze können verschiedene Felder enthalten. In der Tabelle sind relevante Daten eingetragen.

**Tabelle 1: Schema der Radius Datenfelder gem. RFC**

| | |
|---|---|
| 1 | User-Name |
| 2 | User-Password |
| 3 | CHAP-Password |
| 4 | NAS-IP-Address |
| 5 | NAS-Port |
| 6 | Service-Type |
| 7 | Framed-Protocol |
| 8 | Framed-IP-Address |
| 9 | Framed-IP-Netmask |
| 10 | Framed-Routing |
| 11 | Filter-Id |
| 12 | Framed-MTU |
| 13 | Framed-Compression |
| 14 | Login-IP-Host |
| 15 | Login-Service |
| 16 | Login-TCP-Port |
| 17 | (unassigned) |
| 18 | Reply-Message |
| 19 | Callback-Number |
| 20 | Callback-Id |
| 21 | (unassigned) |
| 22 | Framed-Route |
| 23 | Framed-IPX-Network |
| 24 | State |
| 25 | Class |
| 26 | Vendor-Specific |
| 27 | Session-Timeout |
| 28 | Idle-Timeout |
| 29 | Termination-Action |
| 30 | Called-Station-Id |
| 31 | Calling-Station-Id |
| 32 | NAS-Identifier |
| 33 | Proxy-State |
| 34 | Login-LAT-Service |
| 35 | Login-LAT-Node |
| 36 | Login-LAT-Group |
| 37 | Framed-AppleTalk-Link |
| 38 | Framed-AppleTalk-Network |
| 39 | Framed-AppleTalk-Zone |
| 40-59 | (reserved for accounting) |
| 60 | CHAP-Challenge |
| 61 | NAS-Port-Type |
| 62 | Port-Limit |
| 63 | Login-LAT-Port |

Der Radiusdatensatz enthält somit alle für die Abrechnung erforderlichen Informationen.

Mit Hilfe dieser Verfahren wird heute überwiegend die Internetnutzung per Einwahl kontrolliert und die Abrechnungsdatensätze erzeugt.

Bislang wird diese Struktur aber ausschließlich für die Kostenermittlung des Benutzers verwendet. Alle anderen Daten werden für Statistiken, Missbrauchsverhinderung und sonstige betriebliche Belange oder für erweiterte Funktionen erfasst, die hier aber nicht weiter betrachtet werden.

Durch die US 2002/036991 A1 wird ein Kommunikationssystem beschrieben, welches es dem Inhaber eines Mobilfunkgeräts ermöglicht, das Internet über einen Festnetzzugang zu nutzen. Dazu wird das Mobilfunkgerät beispielsweise über eine Bluetooth-Verbindung in ein in seiner Reichweite befindliches lokales Netzwerk mit einem Gateway eingebunden. Zur Internetnutzung muss sich das Mobilfunkgerät beziehungsweise dessen Nutzer entweder auf der Grundlage eines entsprechenden Listeneintrags unmittelbar gegenüber dem Gateway oder, wenn dies nicht möglich ist, gegenüber einem mittels des Gateways angesprochenen Netzwerkserver eines Internet Service Providers authentifizieren. Durch das Gateway werden dabei unter Verwendung eines gesonderten Protokolls die Authentifikationsdaten von dem Mobiltelefon abgefragt und im letztgenannten Fall der für die Authentifizierung erforderliche Datenaustausch zwischen dem Mobilfunkgerät und dem Netzwerkserver des Internet Service Providers sowie zwischen dem vorgenannten Netzwerkserver und einem Accountserver des für das Mobilfunkgerät zuständigen Mobilfunknetzbetreibers organisiert. Das Gateway verfügt dazu über Funktionen zur Protokoll- und Medienkonvertierung. Demnach erfordert die in der genannten Druckschrift beschriebene Lösung teilnehmerseitig Veränderungen an der Infrastruktur sowie die Verwendung eines oder mehrerer spezieller, auf das Verfahren zugeschnittener Protokolle.

US 2002/0041663 beschreibt ein Verfahren wobei ein Internetanschluss geteilt wird mit 'prepaid' und 'pay-per-use' Kunden.

Aufgabe der Erfindung ist es eine Lösung bereitzustellen, die es ohne aufwendige Veränderungen der Infrastruktur und unter Beibehaltung der für den Internetzugang gebräuchlichen Standardprotokolle ermöglicht, dass ein bei einem Internet Service Provider registrierter Kunde das Internet unter Verwendung fremder Anschlüsse beziehungsweise der Anschlüsse Dritter nutzt.

Ein die Aufgabe lösendes Verfahren ist durch die Merkmale des Patentanspruchs 1 charakterisiert.

Aus der Sicht eines Anschlussinhabers bestehen die Vorteile darin, dass
- Fremde Nutzer über den entsprechenden Anschluss ins Internet gelangen können
- Den Anschlussinhaber für die Bereitstellung des Anschlusses die Einnahme einer Provision ermöglicht werden Kann.

Die Situation ist in **Figur 2** dargestellt.

Die Realisierung dieser Aufgabe geschieht vorteilhafterweise unter Benutzung der vorhandenen technischen Verfahren und Parameter durch ein neues Abrechnungsmodell und Modifikation von Parametern. Bestimmte Parameter bekommen außerdem eine zusätzliche Bedeutung.

Die Erfassung bzw. Provisionsermittlung für den Anschlussinhaber geschieht dergestalt, dass im Abrechnungssystem der Anschluss mit seinem Bezug zum Inhaber erfasst wird. Zusätzlich wird der Anschluss markiert, wobei die Markierung besagt, dass die Nutzung durch Dritte gestattet ist. Diese Relation kann im Billing-System des ISP individuell festgelegt werden.

Bei der Erfassung der Radius Logdaten ist nun zwingend nur die zusätzliche Einbettung der Anschlussinformation notwendig. Dies kann z.B. über das Radius Datenfeld 31 (Calling Station ID) erfolgen. Andere Mappings z.B. über individuell zugeordnete Datenfelder sind aber ebenfalls möglich.

Wichtig sind für die Abrechnung im neuen Verfahren lediglich die Erfassung der
- Nutzungsdaten (Zeitdauer, ggf. Datenvolumen, je nach Abrechnungsmodell)
- Benutzeridentifikation
- Anschlussidentifikation

Sind alle diese Informationen im Nutzungsrecord vorhanden, kann der Anschlussinhaber im Abrechnungssystem ermittelt werden und beispielsweise eine Provision aus der Nutzung des Anschlusses gutgeschrieben werden (wie z.B. 10 % der Nutzungsentgelte, die vom Kunden erhoben werden). Dies ist unabhängig vom jeweiligen Gebührenmodell möglich (z.B. Abrechnung nach Zeiteinheit oder Volumen).

Somit wird die Bereitstellung des Anschlusses zur Nutzung durch Dritte für den Anschlussinhaber attraktiv. Er verdient mit der Benutzung und kann darüber ggf. entstehende Grundkosten für den Anschluss bezahlen und bei entsprechender Nutzung zusätzliche Einnahmen erzielen.

Dies ist im Umfeld von DSL-Anschlüssen eine wichtige, neue Funktionalität, die bislang nicht vorhanden ist. Kombiniert mit einem Anschluss über W-LAN Technologie sind somit auch private "Hot-Spots" zum Internet Zugang leicht wirtschaftlich betreibbar.

## Patentansprüche

1. Verfahren zur Internetnutzung, nach welchem registrierten Kunden eines Internet Service Providers ein Login unter Verwendung fremder Anschlüsse und dem Inhaber eines jeweiligen fremden Anschlusses die Einnahme einer Provision für diese Nutzung seines Anschlusses ermöglicht ist, **dadurch gekennzeichnet, dass** der jeweilige für das Login genutzte Anschluss mit seinem Bezug zu dessen Inhaber im Abrechnungssystem des Internet Service Providers erfasst wird, indem bei der Erfassung der Logdaten eine Anschlussinformation für den betreffenden, als zugelassen zur Nutzung durch Dritte in dem Abrechnungssystem markierten Anschluss aus einem Datenfeld der für den Zugang zum Internet und bei dessen Nutzung verwendeten Protokolle in die Logdaten eingebettet wird.

2. Verfahren nach Anspruch 1, **dadurch gekennzeichnet, dass** dieses für eine Verwendung des PPP-Protokolls und des RADIUS Protokolls für den Zugang zum Internet und dessen Nutzung ausgebildet ist.

3. Verfahren nach Anspruch 2, **dadurch gekennzeichnet, dass** die Einbettung der Anschlussinformation durch Nutzung des Datenfelds 31 des RADIUS Protokolls erfolgt.

## Claims

1. A method for internet use which enables registered users of an internet service provider a login using third party connections, and the subscriber of the respective third party connection to get a provision for this use of his connection, **characterised in that** the respective connection used for the login, together with its relation to the subscriber, is registered in the accounting system of the internet service provider, by embedding, during recording of the log data, a connection information for the respective connection marked as authorised for use by third parties in the debting system, from a data field of the protocols used for the access to the internet and the use thereof, into the log data.

2. The method according to claim 2, **characterised in that** it is configured for use of the PPP protocol and the RADIUS protocol for the access to the internet and the use thereof.

3. The method according to claim 2, **characterised in that** the embedding of the connection information is achieved by using data field 31 of the RADIUS protocol.

## Revendications

1. Procédé de l'utilisation d'Internet, dans lequel les abonnés inscrits d'un fournisseur de services Internet peuvent se connecter au moyens des autres branchements, et l'abonné d'un autre branchement peut recevoir une provision pour ladite utilisation de son branchement, **caractérisé en ce que** le branchement respective utilisé pour la connexion est recensé, avec sa relation à l'abonné dudit branchement, dans le système comptable du fournisseur de services Internet, en intégrant, pendant la recension des données de journal, une information de connexion pour le branchement respectif marqué d'être autorisé pour l'utilisation par un tiers dans le système comptable, à partir d'un champ de données des protocoles utilisés pour l'accès à l'Internet et pendant l'utilisation de ce dernier, dans les données de journal.

2. Procédé selon la revendication 2, **caractérisé en ce qu'**il est configuré pour utiliser le protocole PPP et le protocole RADIUS pour l'accès à l'Internet et l'utilisation de ce dernier.

3. Procédé selon la revendication 2, **caractérisé en ce que** ladite intégration de l'information de connexion s'effectue par l'utilisation du champ de données 31 du protocole RADIUS.
